(19) Europäisches Patentamt / European Patent Office / Office européen des brevets

(11) EP 4 610 702 A1

(12) EUROPEAN PATENT APPLICATION

(43) Date of publication:
03.09.2025   Bulletin 2025/36

(21) Application number: 24159905.9

(22) Date of filing: 27.02.2024

(51) International Patent Classification (IPC):
*G02B 6/42* (2006.01)

(52) Cooperative Patent Classification (CPC):
G02B 6/4201; G02B 6/4269; G02B 6/4292

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(71) Applicant: Winse Power Oy
33720 Tampere (FI)

(72) Inventors:
• **Arto, Aho**
33870 Tampere (FI)
• **Veikka, Nikander**
33100 Tampere (FI)
• **Ville, Polojärvi**
33710 Tampere (FI)

(74) Representative: WSL Patentanwälte
Partnerschaft mbB
Kaiser-Friedrich-Ring 98
65185 Wiesbaden (DE)

(54) **A PACKAGE FOR AN OPTOELECTRONIC CHIP ASSEMBLY**

(57)     The present invention relates to a package for an optoelectronic chip assembly According to the invention the package comprises: a back wall; a basic body, wherein the basic body comprises an opening and a mechanical interface; wherein the back wall and the basic body form a cavity; an adapter, wherein the adapter supports at least a light guiding means or a receptacle for an optical fiber connector; a chip seat to accommodate the optoelectronic chip assembly; and an electrical interface comprising a plurality of chip contacts, a plurality of access contacts and a plurality of connections, wherein the plurality of chip contacts is arranged such that during an operation of the package an optoelectronic chip assembly accommodated on the chip seat can be contacted to the plurality of chip contacts, wherein the plurality of access contacts is arranged outside the cavity so as to be contactable, and wherein the plurality of connections electrically conductively connects the plurality of chip contacts and the plurality of access contacts; wherein the back wall and the basic body are in thermal contact with each other; wherein the opening allows electromagnetic radiation to enter or exit the cavity; wherein the adapter is interchangeably mounted on the mechanical interface such that during the operation of the package light guided by the light guiding means or through the optical fiber connector enters the cavity through the opening; wherein the chip seat is positioned so that the optoelectronic chip assembly when mounted is located in the cavity; wherein the plurality of chip contacts is located in the cavity; and wherein the back wall or the basic body is thermally conductive acting as a heat dissipator for cooling of the optoelectronic chip assembly when accommodated on the chip seat.

Fig. 4

EP 4 610 702 A1

**Description**

The present invention relates to a package for an optoelectronic chip assembly.

The package according to the present invention is in particular suitable for packaging of a photovoltaic power converter (PVC). Photovoltaic power converters are semiconductor structures converting electromagnetic radiation emitted by a man-made electromagnetic radiation source into electric power. The combination of a man-made electromagnetic radiation source and a photovoltaic power converter is also denoted as a power-by-light system. Power-by-light systems are used to transfer power to remote devices not being connected to an electricity grid. A descriptive example for the utility of power-by-light systems is the powering of satellites in spacecraft technology. Furthermore, power-by-light systems are frequently employed to provide a galvanic isolation between two electrically powered components.

Photovoltaic power converters are commercially available on a chip level. Even photovoltaic power converters packaged as power-by-light receivers are readily available for some applications. However, it has turned out that the number of different applications requiring different types of optical coupling and different types of electric/electronic interfaces lead to a multitude of packages to be stocked by the manufacturers of power-by-light receivers.

Thus, there is a need for a versatile and modular package for an optoelectronic chip assembly addressing a large number of possible applications.

The above object is solved by a package for an optoelectronic chip assembly according to the attached independent claim 1. Therefore, the package for an optoelectronic chip assembly according to the present invention comprises: a back wall; a basic body, wherein the basic body comprises an opening and a mechanical interface; wherein the back wall and the basic body form a cavity; an adapter, wherein the adapter supports at least a light guiding means or a receptacle for an optical fiber connector; a chip seat to accommodate the optoelectronic chip assembly; and an electrical interface comprising a plurality of chip contacts, a plurality of access contacts and a plurality of connections, wherein the plurality of chip contacts is arranged such that during an operation of the package an optoelectronic chip assembly accommodated on the chip seat can be contacted to the plurality of chip contacts, wherein the plurality of access contacts is arranged outside the cavity so as to be contactable, and wherein the plurality of connections electrically conductively connects the plurality of chip contacts and the plurality of access contacts; wherein the back wall and the basic body are in thermal contact with each other; wherein the opening allows electromagnetic radiation to enter or exit the cavity; wherein the adapter is interchangeably mounted on the mechanical interface such that during the operation of the package light guided by the light guiding means or through the optical fiber connector enters the cavity through the opening; wherein the chip seat is positioned so that the optoelectronic chip assembly when mounted is located in the cavity; wherein the plurality of chip contacts is located in the cavity; and wherein the back wall or the basic body is thermally conductive acting as a heat dissipator for cooling of the optoelectronic chip assembly when accommodated on the chip seat.

It is the basic idea of the present invention to provide a modular package for an optoelectronic chip assembly, in particular for an optoelectronic chip assembly comprising a photovoltaic power converter, allowing to address a plurality of applications with a reduced number of parts and an enhanced thermal management. Due to the standardized electrical contacting by the electrical interface the package after shipping can be integrated into larger entities of electronics and optoelectronics using standardized system integration processes.

In an embodiment the electrical interface is provided by a plurality of wires fed through the wall of the back wall or of the basic body, wherein an exposed end of each wire in the cavity is the respective chip contact and an exposed end of each wire outside the cavity is the access contact.

In an embodiment of the present invention, the plurality of chip contacts is provided in at least one electrical chip socket. In an embodiment the chip socket is mounted on an inner surface of the back wall or the basic body. In an embodiment of the present invention, the plurality of chip contacts is a plurality of contact pads provided on an isolating substrate. In an embodiment the isolating substrate is mounted on an inner surface of the back wall or the basic body.

In an embodiment of the present invention, the plurality of access contacts is provided in at least one electrical access socket. In an embodiment the access socket is mounted on an outer surface of the back wall or the basic body.

In an embodiment, there is an electrical feed through between the plurality of access contacts and the plurality of chip contacts.

The back wall and the basic body together form a cavity, wherein on an inner surface of the back wall or of the basic body the chip seat is located. The chip seat is designed to accommodate the optoelectronic chip assembly.

The back wall, the basic body and the adapter together with the light guiding means or the receptacle for an optical fiber supported in the adapter protect the optoelectronic chip assembly against environmental influences. In an embodiment the basic body and the adapter together with the light guiding means or the receptacle for an optical fiber supported in the adapter provide a sealing for the optoelectronic chip assembly mounted on the chip seat against environmental influences, in particular against particles, gases, pressure differences and moisture. A protection against pressure differences makes the package ready for vacuum applications and applications in high pressure environments.

The adapter is a carrier for a light guiding means or a receptacle for an optical fiber connector. In the sense of the present application, a light guiding means is for example a lens or an objective focusing incoming light onto the optoelectronic chip assembly. Alternatively, the adapter supports a receptacle forming a socket for an optical fiber. The adapter together with the light guiding means or the receptacle closes the opening and thus the cavity against environmental influences.

The adapter is interchangeably mounted on the mechanical interface of the basic body. The mechanical interface in turn is provided at or close to the opening of the basic body.

In an embodiment, a single type of adapter can be equipped selectively with different types of light guiding means or receptacles.

In an embodiment of the present invention, the mechanical interface is an internal thread integrated into a cylindrical opening in the basic body. In this embodiment the adapter is a cylindrical element comprising an external thread such that the adapter can be screwed into the mechanical interface and thus is placed at the opening. Thread can be one of the following but is not limited to standard threads of SM01 (1.035"-40), SM1.5 (1.535"-40), SM02 (2.035"-40), SM03 (3.035"-40) , SM05 (0.535"-40), SM30 (M30.5 x 0.5), C-Mount (1.00"-32), SMA905 and SMA906 thread (1/4-36") (bulk head) and FC/PC thread (M8 x 0.75) (bulk head).

In an embodiment, the mechanical interface comprises a plurality of different threads which are used to connect different sizes of adapters together with the light guiding means or the receptacle for an optical fiber supported in the adapter.

In an embodiment of the present invention, the mechanical interface is a bayonet mount or breech lock integrated into a cylindrical opening in the basic body.

In an embodiment of the present invention, the light guiding means is at least one of a lens, a mirror, a grin lens, a window and a filter.

In an embodiment of the present invention, the back wall and the basic body are formed by a single part.

In an embodiment of the present invention, the back wall and the basic body are interchangeably mounted at each other. By providing the back wall and the basic body in two different parts mounted at each other, e.g. using screws, the cavity of the package can easily be opened. Furthermore, a plurality of different designs of back walls can be combined with a single design of the basic body or vice versa. In an embodiment, a single design of the basic body is provided, wherein multiple designs of back walls are provided in order to allow adaption of the package to different types of optoelectronic chip assemblies and different types of applications.

In an embodiment the back wall and the basic body are made of metal, preferably made of aluminum alloys, copper alloys or stainless steel.

In an embodiment, the chip seat comprises a planar surface on which the optoelectronic chip assembly can be placed. In an embodiment the optoelectronic chip assembly is adhesively bonded onto the planar surface of the chip seat, e.g. soldered or glued. In an embodiment the optoelectronic chip assembly is mounted on the chip seat using a screw or a clamp.

In an embodiment of the present invention, the chip seat comprises a recess in an inner surface of the cavity. A recess matched to the dimensions of the optoelectronic chip assembly facilitates alignment of the optoelectronic chip assembly in particular with respect to an optical axis of the light guiding means or the receptacle.

In an embodiment, the package also comprises the optoelectronic chip assembly placed on the chip seat.

In an embodiment of the present invention the optoelectronic chip assembly comprises a substrate, e.g. a circuit board, and an optoelectronic chip mounted on the substrate. In an embodiment the optoelectronic chip comprises a photovoltaic power converter. Optionally, the optoelectronic chip assembly comprises further circuitry in addition to the optoelectronic chip.

In a further embodiment, the optoelectronic chip assembly comprises a plurality of contact pads mounted on the substrate.

In an embodiment of the present invention, the optoelectronic chip assembly is electrically connected to the chip contacts of the electrical interface. In an embodiment the chip contacts are electrically connected to the contact pads on the substrate.

The enhanced thermal management of the package is provided by the thermal contact between the back wall and the basic body. This way both elements contribute to the dissipation of heat.

In an embodiment, the chip seat is located on the back wall. In this embodiment, the back wall acts as a heat dissipator for cooling of the optoelectronic chip assembly. However, the basic body contributes to the distribution of heat due to the thermal coupling.

In an embodiment of the present invention, an outer surface of at least the back wall or the basic body is shaped as a convection heat exchanger. In an embodiment, the convection heat exchanger is provided by a convection enhancing surface or a heat emissivity enhancing surface. In an embodiment of the present invention, the convection heat exchanger comprises one or more fins, taps or other surface enlarging elements.

In an embodiment of the present invention, the package provides for an exclusively passive cooling of the optoelectronic chip assembly. This is of particular importance for all power-by-light applications which typically do not provide enough power for any active cooling scheme like a water cooling or a fan.

In a further embodiment of the present invention, at least the back wall or the basic body have a thermal conductivity in a range from $50 \frac{W}{m \cdot K}$ to $500 \frac{W}{m \cdot K}$.

In an embodiment, a seal is mounted or applied between the back wall and the basic body to environmentally seal the cavity to avoid entering of dust or particles, gases and moisture into the cavity. In an embodiment the seal protects the cavity and thus the optoelectronic chip assembly against pressure differences. In a further embodiment the seal enhances the thermal coupling between the backwall and the basic body. In an embodiment, at least part of the seal has a thermal conductivity of $0.5 \frac{W}{m \cdot K}$ or more.

In an embodiment, the thermal coupling between the back wall and the basic body is enhanced by soldering, by applying thermally conductive paste or by using thermally conductive sheets. In an embodiment, the thermally conductive paste has a thermal conductivity of $0.5 \frac{W}{m \cdot K}$ or more. In a further embodiment, the solder has a thermal conductivity of $20 \frac{W}{m \cdot K}$ or more. In a further embodiment, the thermally conductive sheet has a thermal conductivity of $100 \frac{W}{m \cdot K}$ or more.

In an embodiment of the present invention, the package comprises a package extension, wherein the package extension is releasably mounted on the basic body or on the back wall and wherein the package extension accommodates an electronic circuitry electrically connected to the plurality of access contacts. The concept of mounting a package extension either to the basic body or to the back wall enables an enhanced system integration. The back wall and/or the basic body in this embodiment are used as a carrier for further electronic circuitry which can be provided by a customer of the packaged optoelectronic chip assembly. In an embodiment of the present invention, the package extension is releasably mounted on the back wall. Electronic circuitry to be accommodated in the package extension includes a camera, a detector or any other electric power consuming device.

In an embodiment of the present invention, the package extension together with an outer surface of the basic body or of the back wall forms a secondary cavity to accommodate the electronic circuitry.

In an embodiment of the present invention, the back wall or the basic body forms a heat sink relatively to the package extension. In this embodiment the back wall and the basic body provide the thermal management for any package extension. Thus e.g. a customer of a packaged optoelectronic chip assembly cannot only draw power form the package, but the package also provides for dissipation of heat generated by circuitry in the package extension.

Optionally, the package extension is mounted at least to the back wall or to the basic body by a plurality of fasteners. This design is highly versatile and allows to modularly stack a package extension onto the cavity provided by a combination of the basic body and the back wall.

Optionally, the package extension is mounted at least to the back wall or to the basic body by a quick release mechanism or by magnet. This design is highly versatile and allows to modularly stack a package extension onto the cavity provided by a combination of the basic body and the back wall. This design also allows further ease of mounting the package extension at the back wall or at the basic body with fast toolless manner.

In an embodiment, a seal is mounted or applied between the back wall or the basic body and the package extension to environmentally seal the cavity and/or the secondary cavity of the package extension to avoid entering of dust or particles, gases and moisture into the cavity or into the secondary cavity. In an embodiment the seal protects the cavity or the secondary cavity and thus the optoelectronic or the electronic circuitry inside the package extension against pressure differences. In a further embodiment the seal enhances the thermal coupling between the backwall or the basic body and the package extension. In an embodiment, at least part of the seal has a thermal conductivity of $0.5 \frac{W}{m \cdot K}$ or more.

In an embodiment of the present disclosure, the package extension has a quadratic footprint of 40 mm x 40 mm. This footprint is characteristic for a plurality of housings for electronic components and allows to use standard secondary packages as the package extension.

In an embodiment of the present invention, an inner surface of the basic body or of the back wall located in the cavity is reflective for electromagnetic radiation. This embodiment allows electromagnetic radiation into a light guiding means accommodated in the receptacle. In an embodiment of the present invention, this reflection of electromagnetic radiation into the light guiding means is used to provide data communication from the cavity to the outside. In an embodiment, this reflection of electromagnetic radiation into the light guiding means is used couple a part of the electromagnetic radiation into an optical fiber connector accommodated in the receptacle for an optical fiber connector. In another embodiment of the present invention, reflection of electromagnetic radiation into the light guiding means is used in order to reflect back light originating from the optoelectronic chip assembly. This leads to an increase the of the light coupling efficiency of the optoelectronics chip assembly, which further reduces the overall heat load on the package.

In an embodiment of the present invention, either the basic body or the back wall provides a water-cooling functionality. In another embodiment, a water cooling devices is mounted at the basic body or at the back wall.

Further advantages, features and applications of the present disclosure will become apparent from the following description of implementations and the corresponding figures attached. In the figures, like elements are denoted by identical reference numbers.

Figure 1 is an isometric cross-sectional view of parts of a package according to the present invention.

Figure 2 is an isometric cross-sectional view of the package of figure 1 with an optoelectronic chip assembly and a lens mounted.

Figure 3 is an isometric cross-sectional view of the package of Figure 1 with an optoelectronic chip assembly and a receptacle for an optical fiber connector mounted.

Figure 4 is an isometric cross-sectional view of an alternative embodiment of the package.

Figure 5 is an isometric top view of a package according to the present invention with a package extension.

Figure 6 is a cross-sectional view of the package of Figure 5.

Figure 7 is an isometric view of a package according to a further embodiment of the present invention with a plurality of package extensions.

The embodiments according to the figures underline the modularity of the package 4 according to the present invention.

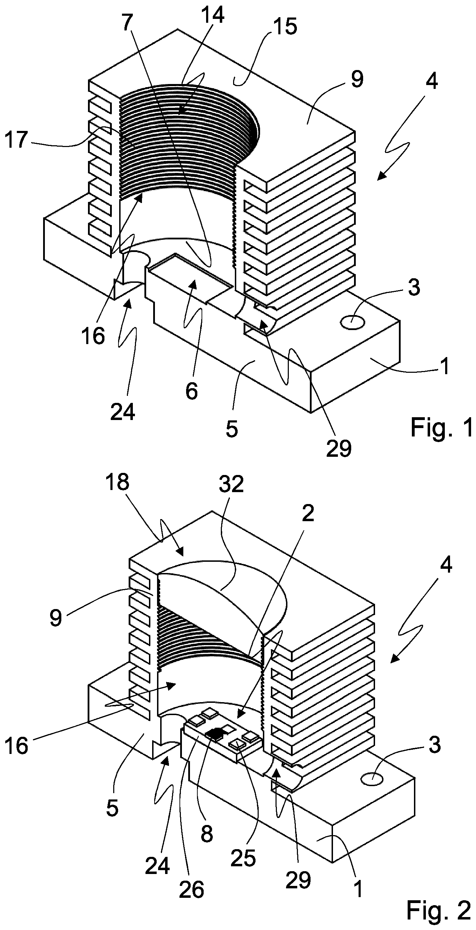

Figures 1 to 3 illustrate a first implementation of a package 4 wherein the back wall 5 and the basic body 9 are machined from a single block of aluminum alloy. The back wall 5 and the basic body 9 confine and seal a cavity 16.

A baseplate 1 is integrally formed with the back wall 5 and is tailor-made for the needs of a specific application. In particular the positions of mounting through holes 3 match the positions of internal threads at a device into which the package 4 is to be integrated. The four mounting through holes 3 serve to fix the baseplate 1 and thus the package to a device into which the package 4 shall be integrated. The base plate 1 may act as a path for heat conduction between the package 4 and a device to which the package is mounted.

In the figures, the back wall 5 provides the electric connectivity of the package 4 to the optoelectronic chip assembly 2. Further, the back wall 5 is the backbone of the thermal management of the package 4 with the optoelectronic chip assembly 2.

In order to provide this functionality, the back wall 5 hosts a chip seat 6. The optoelectronic chip assembly 2 is soldered onto the chip seat 6 to provide a good thermal contact between the optoelectronic chip assembly 2 and the back wall 5. The chip seat 6 is designed as a recess in an inner surface 7 of the back wall 5.

In the embodiments presented, the optoelectronic chip assembly 2 comprises a circuit board 26 as a substrate or carrier, a photovoltaic power converter chip 8 and four exposed contact pads 25 for electrical wiring of the photovoltaic power converter chip 8.

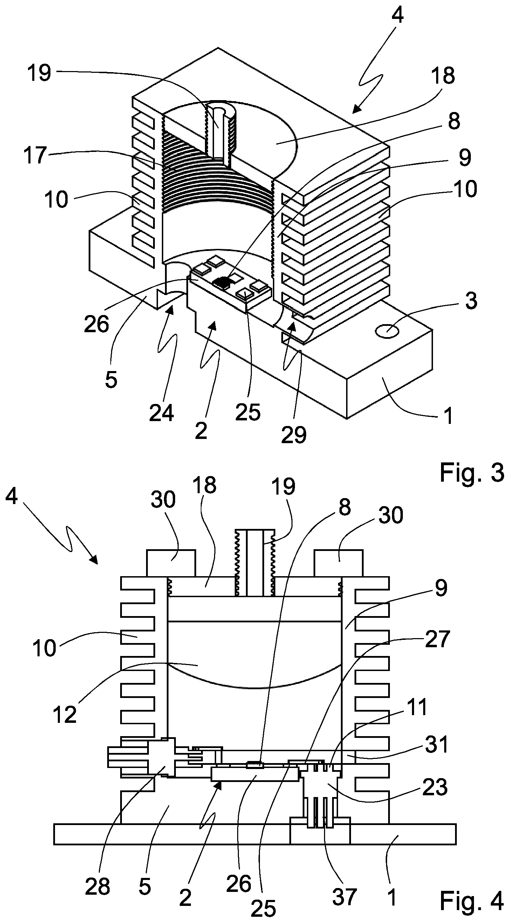

A plurality of chip contacts 11 (see e.g. Figure 4) is provided on a socket 23 reaching through an electrical feedthrough 24 in the back wall 5. The optoelectronic chip assembly 2 is electrically connected to the outside of the cavity 16 by providing an electric bridge 27 between the chip contacts 11 and the pads 25 on the board 26. The chip contacts 11 in turn are wired by electrical connections extending in the socket 23 through the electrical feedthrough 24.

In the variants of Figures 1 to 4 an additional electrical interface is provided by a second socket 28 extending in an electrical feedthrough 29 in the basic body (9).

In Figures 2 to 4 an optoelectronic chip assembly 2 with a photovoltaic power converter chip 8 has been placed and glued into the chip seat 6 of the back wall 5. It is apparent from Figure 1 that the chip seat 6 allows for an easy alignment of the optoelectronic chip assembly 2 relatively to the back wall 5.

In the variant of Figure 4, the basic body 9 and the back wall 5 are provided as two separate parts which are mounted at each other using four screws 30. Furthermore, the back wall 5 and the base plate 1 are designed as two separate elements. The screws reach through the basic body, the back wall and into an internal thread in the base plate.

In the embodiment of Figure 4, the basic body 9 serves as the main heat dissipator for any heat load entered into the package 4 by photons being absorbed in the photovoltaic power converter 8.

In order to provide this heat dissipation capability, a thermal contact between the back wall 5 and the basic body 9 is established. Between the back wall 5 and the basic body 9 a seal 31 is located. The seal provides a sealing for the cavity 16 of the package 4 against particles and moisture. In order to still provide the required thermal coupling between the back wall 5 and the basic body 9 the seal 31 has a high thermal conductivity.

In the embodiments described with reference to the Figures, the back wall 5 and the basic body 9 each comprise a plurality of fins 10 on their outer side surfaces. These fins enhance a convection cooling of the package 4.

Figure 4 illustrates that at the basic body additional optical elements like a lens 12 can be mounted to integrate additional optical functionalities in the package 4.

The opening 14 in the top surface 15 of the basic body 9 serves to guide electromagnetic radiation into the cavity 16. An internal thread 17 in the opening 14 of the basic body 9 serves as a mechanical interface to integrate an adapter 18 into the opening 14.

In the figures two types of adapters 18 are presented. Each adapter 18 is provided for two purposes. First, the adapter 18 closes and seals the remaining opening of the package 4 in order to fully seal the cavity 16. Second, the adapter 18 carries either a light guiding means like a lens or a receptacle 19 to receive an optical fiber connector.

Figure 2 schematically shows a combination 32 of an adapter and a lens. In order to mount the lens in the internal thread 17 of the basic body 9 the adapter is either implemented as one or two lock rings or a lens frame.

In contrast, Figures 3 to 7 show embodiments, wherein the adapter 18 carries a receptacle 19 to receive an optical fiber connector. By its design, the adapter 18 provides a centering of an optical fiber mounted to the package 4 by a combination of its optical fiber connector and the receptacle 19 relatively to the photovoltaic power converter 8 in at least two dimensions. In the third dimension, the adapter 18 together with the basic body and the back wall defines the distance between the output facet of the optical fiber connector and the photovoltaic power converter 8. Screwing the adapter 18 in and out of the opening 16 enables an easy adjustment during assembly of the package 4.

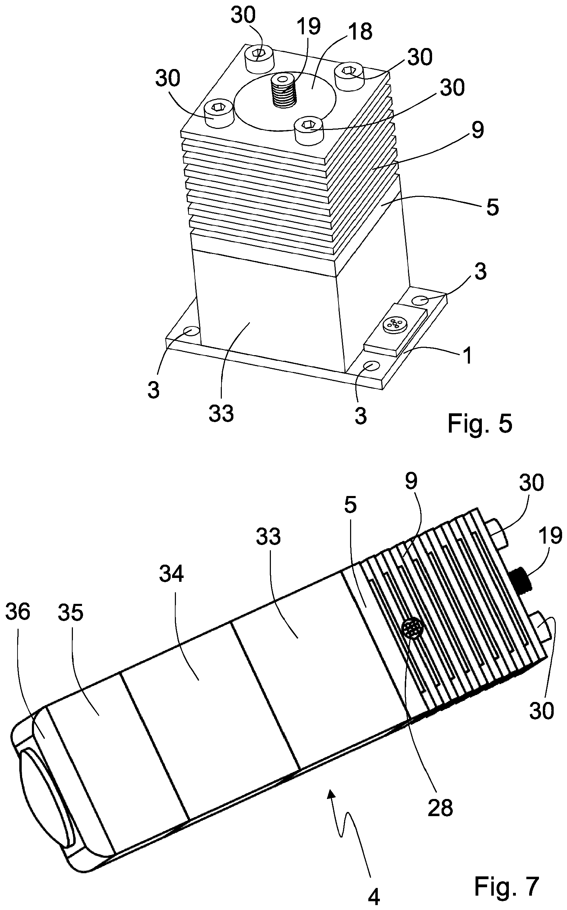

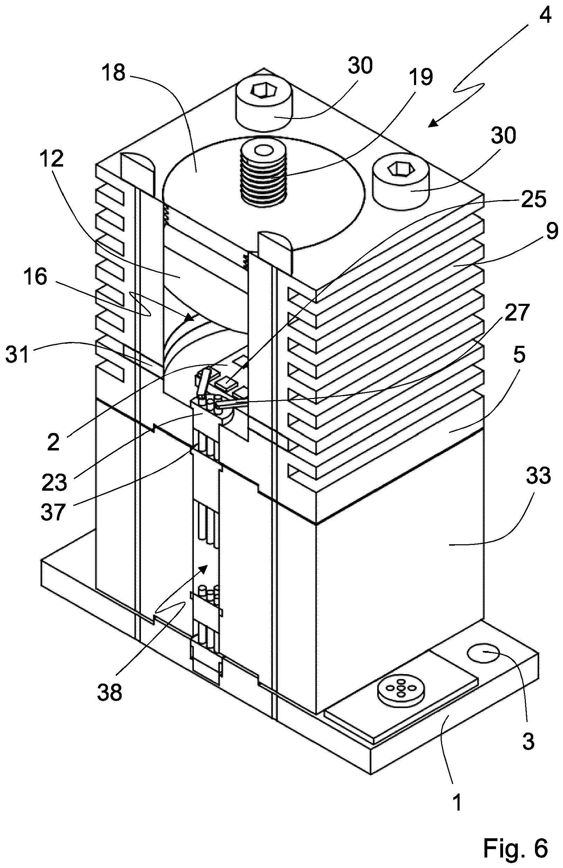

In the embodiments of Figures 5 to 7 the technical design of the back wall 5, the basic body 9 and the adapter 18 is identical to the one shown in Figure 4. However, in the variant of Figures 5 and 6 a single package extension 33 has been mounted outside the cavity 16 on the back wall 5. In the variant of Figure 7 three further extensions 34, 35, 36 have been stacked on the package extension 33.

The package extension 33 is releasably mounted on the back wall 5 and the further extensions 34, 35, 36 of Figure 7 are in turn mounted on the package extension 33. The extensions 33, 34, 35 accommodate electronic circuitry. The extension 36 carries a camera objective for a camera, which camera (not shown in the figures) is provided in the extension 35.

The concept of mounting a package extension 33 to the back wall enables an enhanced system integration. The circuitry in the package extension 33 is electrically connected to the plurality of access contacts 37 provided at the socket 23 outside the cavity 16. The photovoltaic power converter 8 is used to power the circuitry of the extensions 33, 34, 35. Thus, the back wall in this embodiment is used as a carrier for further electronic circuitry or optical components. These additional elements are provided by a customer of the packaged optoelectronic chip assembly 2. Electronic circuitry to be accommodated in the package extension includes a camera, a detector or any other electric power consuming device.

As is apparent from Figure 6, the package extension 33 together with an outer surface of the back wall 5 forms a secondary cavity 38 to accommodate the electronic circuitry.

The back wall 5 and the basic body 9 form a heat sink not only for heat load entering the cavity 16 by photons being absorbed in the photovoltaic power cover 8 but also for heat generated by century in the extensions 33, 34, 35, 36. The back wall 5 and the basic body 9 provide the thermal management for any package extension. Thus e.g. a customer of a packaged optoelectronic chip assembly cannot only draw power from the packaged photovoltaic power converter 8, but the package 4 dissipates heat generated by circuitry in the package extension(s).

For the purposes of the original disclosure, it is pointed out that all features as they are apparent to a person skilled in the art from the present description, the drawings and the claims, even if they have been described specifically only in connection with certain further features, can be combined both individually and in any combination with other features or groups of features disclosed herein, unless this has been expressly excluded or technical circumstances make such combinations impossible or meaningless. A comprehensive, explicit description of all conceivable combinations of features is omitted here only for the sake of brevity and readability of the description.

Whilst the invention has been illustrated and described in detail in the drawings and the preceding description, this illustration and description is given by way of example only and is not intended to limit the scope of protection as defined by the claims. The invention is not limited to the disclosed embodiments.

Variations of the disclosed embodiments are obvious to a person skilled in the art from the drawings, the description and the appended claims. In the claims, the word "comprising" does not exclude other elements or steps, and the indefinite article "one" or "a" does not exclude a plurality. The mere fact that certain features are claimed in different claims does not exclude their combination. Reference signs in the claims are not intended to limit the scope of protection.

**Reference signs**

| | |
|---|---|
| 1 | base plate |
| 2 | optoelectronic chip assembly |
| 3 | mounting through holes |
| 4 | package |
| 5 | back wall |
| 6 | chip seat |

| | |
|---|---|
| 7 | inner surface |
| 8 | photovoltaic power converter chip |
| 9 | basic body |
| 10 | fins |
| 11 | chip contact |
| 12 | lens |
| 14 | opening |
| 15 | top surface |
| 16 | cavity |
| 17 | internal thread |
| 18 | adapter |
| 19 | receptacle |
| 23,28 | socket |
| 24, 29 | electrical feedthrough |
| 25 | contact pad |
| 26 | circuit board |
| 27 | electric bridge |
| 30 | screw |
| 31 | seal |
| 32 | combination of an adapter and a lens |
| 33 | package extension |
| 34, 35, 36 | extension |
| 37 | access contact |
| 38 | secondary cavity |

**Claims**

1. A package (4) for an optoelectronic chip assembly (8), the package (4) comprising

   a back wall (5);
   a basic body (9),
   wherein the basic body (9) comprises an opening (14) and a mechanical interface (17);
   wherein the back wall (5) and the basic body (9) form a cavity (16);
   an adapter (18),
   wherein the adapter (18) supports at least a light guiding means or a receptacle (19) for an optical fibre connector;
   a chip seat (6) to accommodate the optoelectronic chip assembly (8); and
   an electrical interface comprising a plurality of chip contacts (11), a plurality of access contacts (37) and a plurality of connections,

   wherein the plurality of chip contacts (11) is arranged such that during an operation of the package an optoelectronic chip assembly (8) accommodated on the chip seat (6) can be contacted to the plurality of chip contacts (11),
   wherein the plurality of access contacts (37) is arranged outside the cavity (16) so as to be contactable, and
   wherein the plurality of connections electrically conductively connects the plurality of chip contacts and the plurality of access contacts;

   wherein the back wall (5) and the basic body (9) are in thermal contact with each other;
   wherein the opening (14) allows electromagnetic radiation to enter or exit the cavity (16);
   wherein the adapter (18) is interchangeably mounted on the mechanical interface (17) such that during the operation of the package (4) light guided by the light guiding means or through the optical fibre connector enters the cavity through the opening;
   wherein the chip seat (6) is positioned so that the optoelectronic chip assembly (8) when mounted is located in the cavity (16);
   wherein the plurality of chip contacts (11) is located in the cavity; and
   wherein the back wall (5) or the basic body (9) is thermally conductive acting as a heat dissipator for cooling of the optoelectronic chip assembly (8) when accommodated on the chip seat (6).

2. The package (4) according to the previous claims, wherein the back wall (5) and the basic body (9) are interchangeably mounted at each other.

3. The package (4) according to any one of the previous claims, wherein the chip seat is located on the back wall.

4. The package (4) according to any one of the previous claims, wherein the outer surface of at least the back wall (5) or the basic body (9) is shaped as a convection heat exchanger.

5. The package (4) according to any one of the previous claims, wherein the package (4) provides an exclusively passive cooling of the optoelectronic chip assembly (8).

6. The package (4) according to any one of the previous claims, wherein at least the back wall (5) or the basic body (9) has a thermal conductivity in a range from $50 \frac{W}{m \cdot K}$ to $500 \frac{W}{m \cdot K}$.

7. The package (4) according to any one of the previous claims, wherein a seal (31) is mounted between the back wall (5) and the basic body (9), wherein at least part of the seal (31) has a thermal conductivity of $0.5 \frac{W}{m \cdot K}$ or more.

8. The package (4) according to any one of the previous claims, wherein heat dissipation from the optoelectronic chip assembly (8) when accommodated on the chip seat (6) is exclusively provided by the back wall (5) and the basic body (9).

9. The package (4) according to any one of the previous claims, wherein the package comprises a package extension (33), wherein the package extension (33) is releasably mounted on the basic body or on the back wall (5) and wherein the package extension (33) accommodates an electronic circuitry electrically connected to the plurality of access contacts.

10. The package (4) according to claim 9, wherein at least the basic body (9) or the back wall (5) relatively to the package extension (33) is a heat sink.

11. The package (4) according to any one of claims 9 or 10, wherein the package extension (33) is mounted at least to the back wall (5) or to the basic body (9) by a plurality of fasteners.

12. The package (4) according to any one of the previous claims, wherein an inner surface (7) of the basic body (9) or of the back wall (5) located in the cavity (16) is reflective for electromagnetic radiation.

13. The package (4) according to any one of the previous claims, wherein the package comprises the optoelectronic chip assembly (8) on the chip seat (6) the optoelectronic chip assembly (8) comprises a photovoltaic power converter.

14. The package (4) according to any one of the previous claims, wherein the mechanical interface (17) comprises an internal thread (17) in the opening (14), wherein the adapter (18) comprises an external thread, and wherein the adapter (18) is screwed into the mechanical interface (17).

15. The package (4) according to any one of the previous claims, wherein the cavity (16) is environmentally sealed against at least one of particles, gases, pressure difference and moisture.

Fig. 1

Fig. 2

Fig. 3

Fig. 4

Fig. 5

Fig. 7

Fig. 6

## EUROPEAN SEARCH REPORT

**Application Number**

EP 24 15 9905

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/156418 A1 (STAPLETON BRENT [US] ET AL) 20 June 2013 (2013-06-20) <br> * abstract; figures 2C, 3, 5A, 7, 8 * <br> ----- | 1-15 | INV. <br> G02B6/42 |
| A | US 2007/009213 A1 (MEADOWCROFT DAVID J K [GB] ET AL) 11 January 2007 (2007-01-11) <br> * abstract; figure 5 * <br> ----- | 1-15 | |
| A | US 5 960 141 A (SASAKI SEIMI [JP] ET AL) 28 September 1999 (1999-09-28) <br> * abstract; figure 5 * <br> ----- | 1-15 | |

**TECHNICAL FIELDS SEARCHED (IPC)**

G02B

The present search report has been drawn up for all claims

| Place of search | Date of completion of the search | Examiner |
|---|---|---|
| The Hague | 13 August 2024 | Lehtiniemi, Henry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**

EP 24 15 9905

This annex lists the patent family members relating to the patent documents cited in the above-mentioned European search report.
The members are as contained in the European Patent Office EDP file on
The European Patent Office is in no way liable for these particulars which are merely given for the purpose of information.

13-08-2024

| Patent document cited in search report | Publication date | Patent family member(s) | Publication date |
|---|---|---|---|
| US 2013156418 A1 | 20-06-2013 | CN 104115048 A | 22-10-2014 |
| | | EP 2802917 A1 | 19-11-2014 |
| | | JP 2015504243 A | 05-02-2015 |
| | | JP 2016174174 A | 29-09-2016 |
| | | JP 2018067006 A | 26-04-2018 |
| | | KR 20140109423 A | 15-09-2014 |
| | | US 2013156418 A1 | 20-06-2013 |
| | | US 2016341920 A1 | 24-11-2016 |
| | | WO 2013090823 A1 | 20-06-2013 |
| US 2007009213 A1 | 11-01-2007 | CN 1920606 A | 28-02-2007 |
| | | GB 2428134 A | 17-01-2007 |
| | | US 2007009213 A1 | 11-01-2007 |
| US 5960141 A | 28-09-1999 | JP H11119064 A | 30-04-1999 |
| | | US 5960141 A | 28-09-1999 |

EPO FORM P0459

For more details about this annex : see Official Journal of the European Patent Office, No. 12/82